# EUROPEAN PATENT APPLICATION

(11) **EP 2 562 374 A1**
(43) Date of publication of application: **27.02.2013**
(21) Application number: 10850263.4
(22) Date of filing: 22.04.2010
(51) Int. Cl.: F01N 3/20

(54) **CONTROLLER OF INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: ASANUMA, Takamitsu, Toyota-shi Aichi 471-8571 (JP); SOBUE, Yuichi, Toyota-shi Aichi 471-8571 (JP); IMAI, Daichi, Toyota-shi Aichi 471-8571 (JP); SUGAWARA, Kou, Kakegawa-shi Shizuoka 4371492 (JP); KIM, Kyoung-Oh, Toyota-shi Aichi 471-8571 (JP)
(74) Representative: TBK
(86) International application number: PCT/JP2010/057639
(87) International publication number: WO 2011/132322

(57) **Abstract**

A control system of an internal combustion engine in which a catalyst device having oxidation ability is arranged in the exhaust system, is provided. When a temperature of the catalyst device is lower than a set temperature, the combustion temperature is made a first combustion temperature or under or is made a second combustion temperature or over, to make an amount of lower olefin in the exhaust gas smaller than that when the combustion temperature is higher than the first combustion temperature and is lower than the second combustion temperature. Therefore, an amount of lower olefin which reduces the oxidation rate of CO in the catalyst device is decreased so as to realize the quick warming-up of the catalyst device by using of the oxidation reaction heat of CO.

## Description

### TECHNICAL FIELD

The present invention relates to a control system of an internal combustion engine.

### BACKGROUND ART

To purify HC and CO in exhaust gas, an oxidation catalyst device or a three-way catalyst device is arranged in an engine exhaust system. Such a catalyst device having the oxidation ability does not activate sufficiently in a low temperature condition like immediately after the starting-up of the engine. It is desired for the catalyst device to be warmed up quickly to an activation temperature in order to increase the purification ability of HC and CO.

In the catalyst device having the oxidation ability, CO can be oxidized at a lower temperature than that at which HC can be oxidized. Therefore, first, the oxidation reaction heat of CO raises the temperature of the catalyst device. Incidentally, it is known that HC obstructs the oxidation of CO and therefore, the smaller the amount of coexisted HC, the more the oxidation rate of CO can be increased.

It has been suggested that a HC adsorption device is arranged immediately upstream the catalyst device (for example, refer to International Publication WO 00/27508). Accordingly, an amount of HC coexisting with CO in the catalyst device can be reduced by the adsorption of HC in the HC adsorption device.

### DISCLOSURE OF THE INVENTION

Even if the HC adsorption device is arranged immediately upstream the catalyst device as mentioned above, in an engine operating state, the oxidation rate of CO cannot be increased very much and the quick warming-up of the catalyst device cannot be realized.

Accordingly, an object of the present invention is to provide a control system of an internal combustion engine, which can sufficiently increase the oxidation rate of CO in a catalyst device having the oxidation ability to realize the quick warming-up of the catalyst device.

A control system of an internal combustion engine in which a catalyst device having the oxidation ability is arranged in the exhaust system as set forth in claim 1 of the present invention is provided, characterized in that when a temperature of the catalyst device is lower than a set temperature, the combustion temperature is made a first combustion temperature or under or is made a second combustion temperature or over, to make an amount of lower olefin in the exhaust gas smaller than that when the combustion temperature is higher than the first combustion temperature and is lower than the second combustion temperature.

A control system of an internal combustion engine as set forth in claim 2 of the present invention is provided as the control system of an internal combustion engine as set forth in claim 1 characterized in that an engine operating area in which the combustion temperature becomes higher than the first combustion temperature and lower than the second combustion temperature is set, and when the temperature of the catalyst device is lower than the set temperature, it is prohibited that the engine operates in the engine operating area.

A control system of an internal combustion engine as set forth in claim 3 of the present invention is provided as the control system of an internal combustion engine as set forth in claim 2 characterized in that the worse the combustion is, the more the engine operating area is expanded to the high engine load side.

According to the control system of an internal combustion engine as set forth in claim 1 of the present invention, when a temperature of the catalyst device having the oxidation ability, which is arranged in the engine exhaust system, is lower than a set temperature, a combustion temperature is made a first combustion temperature or under or is made a second combustion temperature or over, to make an amount of lower olefin, which particularly reduces the oxidation rate of CO, in the exhaust gas smaller than that when the combustion temperature is higher than the first combustion temperature and is lower than the second combustion temperature. Therefore, the oxidation rate of CO is sufficiently increased so as to realize the quick warming-up of the catalyst device.

According to the control system of an internal combustion engine as set forth in claim 2 of the present invention, in the control system of an internal combustion engine as set forth in claim 1, an engine operating area in which the combustion temperature is higher than the first combustion temperature and lower than the second combustion temperature is set, and when the temperature of the catalyst device is lower than the set temperature, it is prohibited that the engine operates in the engine operating area. Therefore, the combustion temperature can be easily made the first combustion temperature or under or made the second combustion temperature or over.

According to the control system of an internal combustion engine as set forth in claim 3 of the present invention, in the control system of an internal combustion engine as set forth in claim 2, the worse the combustion becomes, the more the engine operating area is expanded to the high engine load side due to the lowering of the combustion temperature. Therefore, even if the combustion deteriorates, the combustion temperature can be certainly made the first combustion temperature or under or made the second combustion temperature or over.

### BRIEF DESCRIPTION OF THE DRAWINGS

Fig. 1 is a schematic view showing the exhaust system of an internal combustion engine which is controlled by a control system according to the present invention.
Fig. 2 is a time-chart showing changes of the oxidation rate of CO in an oxidation catalyst device.
Fig. 3 is a graph showing a relationship between a combustion temperature and a concentration of lower olefin in the exhaust gas.
Fig. 4 is a first flow-chart showing a control of the engine by the control system according to the present invention.
Fig. 5 is a second flow-chart showing a control of the engine by the control system according to the present invention.
Fig. 6 is a map showing an area in which the engine operation is prohibited in the second flow-chart.

### BEST MODE FOR CARRYING OUT THE INVENTION

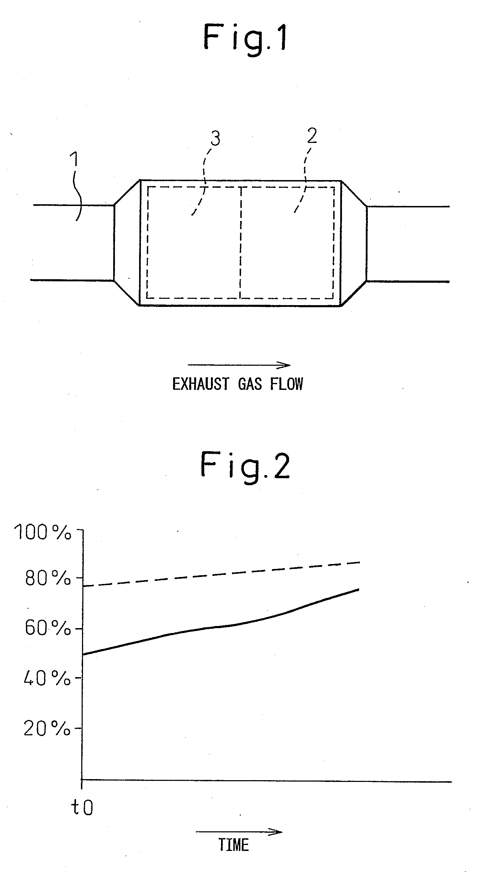

Fig. 1 is a schematic view showing the exhaust system of an internal combustion engine which is controlled by a control system according to the present invention. In the figure, reference numeral 1 is an exhaust passage and reference numeral 2 is a three-way catalyst device or a catalyst device having the oxidation ability with a honeycomb-shaped base material on which at least an oxidation catalyst such as platinum is carried (including a NOₓ storing/reducing catalyst device). The engine may be a spark-ignition engine or a diesel engine.

Reference numeral 3 is a HC adsorption device arranged upstream the catalyst device 2. The HC adsorption device 3 comprises a honeycomb-shaped base material on which a beta zeolite or ZMS-5 is carried. The lower the temperature of the device, the larger an amount of HC that can be adsorbed becomes. Therefore, the HC adsorption device adsorbs HC in the exhaust gas in low temperatures and releases the adsorbed HC in high temperatures.

The catalyst device 2 oxidizes HC and CO in the exhaust gas to purify them. However, when the oxidation catalyst has not become an activation temperature, the catalyst device cannot sufficiently oxidize particular HC and thus it is needed to quickly warm up the catalyst device immediately after the engine starting-up. The catalyst device 2 can oxidize CO at a lower temperature than that at which HC can be oxidized, and thus is warmed up by using of the oxidation reaction heat of CO at the beginning.

Fig. 2 is a time-chart showing changes of the oxidation rate of CO in the catalyst device 2. The solid line shows a case of an exhaust gas containing about 1600 ppm of propylene C₃H₆ (lower olefin) and CO in which the mixing of propylene is stopped at a time t0. The dotted line shows a case of an exhaust gas containing about 1600 ppm of decane C₁₀H₂₂ (higher olefin) and CO in which the mixing of decane is stopped at the time t0. If HC does not coexist, the oxidation rate of CO increases to about 100%. However, because propylene or decane coexist, each oxidation rate of CO becomes lower than 100%. When the mixing of propylene or decane is stopped, each oxidation rate of CO gradually increases.

As shown in Fig. 2, the lower olefin of which carbon atom number is 5 or under (for example, ethylene or propylene) obstructs the oxidation of CO in the oxidation catalyst more than the higher olefin (decane) and thus drops the oxidation rate of CO so much.

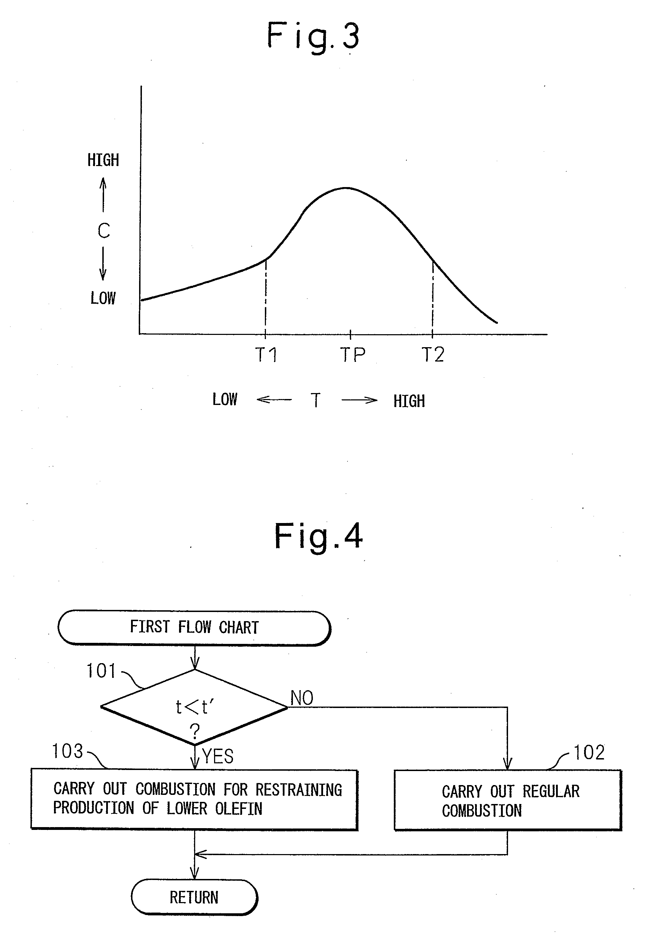

Fig. 3 is a graph showing a relationship between a combustion temperature T (maximum combustion temperature) in the cylinder and a concentration C of lower olefin in the exhaust gas. The concentration of lower olefin is largest at the combustion temperature TP (for example, about 1000K). When a combustion temperature T is this combustion temperature TP or is higher than a first combustion temperature T1 (for example, about 900K) and lower than a second combustion temperature T2 (for example, about 1100K), the concentration of lower olefin becomes relatively high and a larger amount of lower olefin than that when the combustion temperature T is the first combustion temperature T1 or under or the combustion temperature T is the second combustion temperature T2 or over is exhausted from the cylinder.

Accordingly, when the temperature of the catalyst device 2 is lower than the activation temperature of the oxidation catalyst immediately after the engine starting-up, if an operation in which the combustion temperature is higher than the first combustion temperature T1 and lower than the second combustion temperature T2 is carried out, a large amount of lower olefin is included in the exhaust gas. Even if the HC adsorption device 3 is arranged immediately upstream the catalyst device 2 and a part of the large amount of lower olefin is adsorbed in the HC adsorption device 3, a relative large amount of lower olefin obstructs the oxidation of CO in the oxidation catalyst and thus drops the oxidation rate of CO so much.

Therefore, the warming-up of the catalyst device 2 using the oxidation reaction heat of CO becomes insufficiently and thus the quick warming-up of the catalyst device cannot be realized. If the HC adsorption device 3 is not arranged upstream the catalyst device, when the operation in which the combustion temperature is higher than the first combustion temperature T1 and lower than the second combustion temperature T2 is carried out, a large amount of lower olefin extremely drops the oxidation rate of CO so as to delay the warming-up of the catalyst device 2 more.

The control system of the present embodiment controls the engine according to a first flow-chart shown in Fig. 4 to realize the quick warming-up of the catalyst device 2. First, at step 101, it is determined if the temperature (t) (measured or estimated) of the catalyst device 2 is lower than a set temperature (t') (for example, the activation temperature of the oxidation catalyst). When the result at step 101 is negative, the warming-up of the catalyst device 2 has finished, and therefore at step 102, regular combustion is carried out.

On the other hand, when the result at step 101 is positive, the warming-up of the catalyst device 2 has not finished, and therefore at step 103, combustion for restraining the production of lower olefin is carried out. In the combustion for restraining the production of lower olefin, the combustion temperature T (maximum combustion temperature) in the cylinder is made the first combustion temperature T1 or under, or the second combustion temperature T2 or over.

For example, when an exhaust valve open timing can be varied by a variable valve timing mechanism, if the exhaust valve open timing is advanced to bring forward the combustion finishing time in an expansion stroke, the combustion temperature can be made the first combustion temperature T1 or under. On the other hand, if the exhaust valve open timing is delayed to bring backward the combustion finishing time in an expansion stroke, the combustion temperature can be made the second combustion temperature T2 or over. Further, an addition fuel injection into the cylinder in an expansion stroke can make the combustion temperature the second combustion temperature T2 or over.

When the maximum combustion temperature T is made the second combustion temperature T2 or over, there is a period in which the temperature in the cylinder is higher than the first combustion temperature T1 and is lower than the second combustion temperature T2. However, this period is very short and may not contribute to the production of lower olefin.

Thus, according to the combustion for restraining the production of lower olefin, an amount of exhausted lower olefin which extremely drops the oxidation rate of CO in the oxidation catalyst can be decreased so that the oxidation rate of CO in the oxidation catalyst is increased so as to realize the quick warming-up of the catalyst device 2 by the oxidation reaction heat of CO.

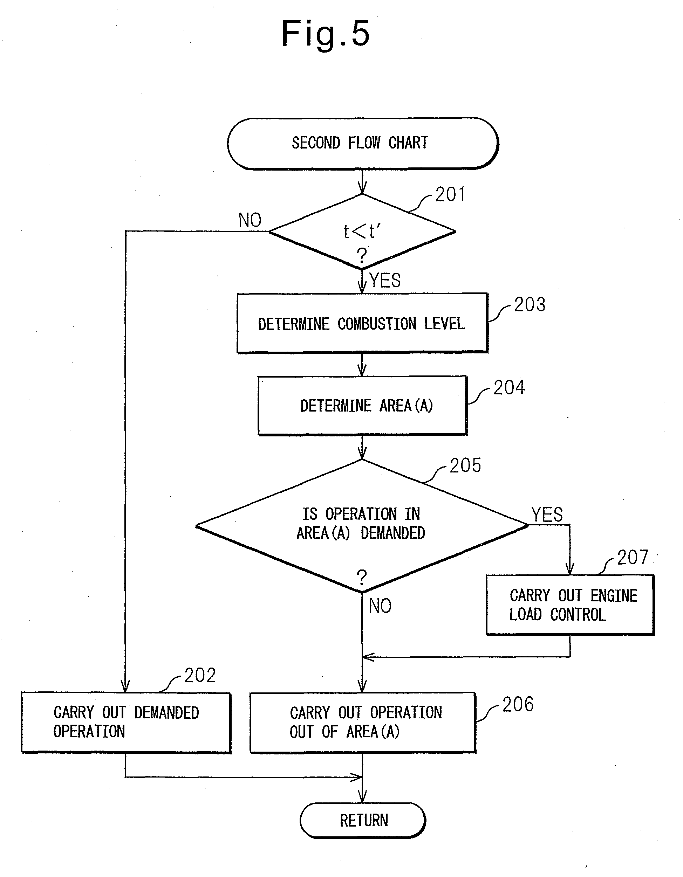

Fig. 5 is a second flow-chart showing a control of the engine carried out by the control system of the present embodiment, to realize the quick warming-up of the catalyst device 2. First, at step 201, it is determined if the temperature (t) (measured or estimated) of the catalyst device 2 is lower than the set temperature (t') (for example, the activation temperature of the oxidation catalyst). When the result at step 201 is negative, the warming-up of the catalyst device 2 has been finished and therefore at step 202, a demanded operation is carried out as it is.

On the other hand, when the result at step 201 is positive, at step 203, a current combustion level is determined on the basis of fuel properties in the fuel tank (for example, cetane number and a concentration of sulfur), parts deterioration degree (for example, deterioration degrees of the fuel injector and the recirculation exhaust gas cooler), and the like. Next, at step 204, an area A in which an engine operation is prohibited is determined on the basis of the current combustion level.

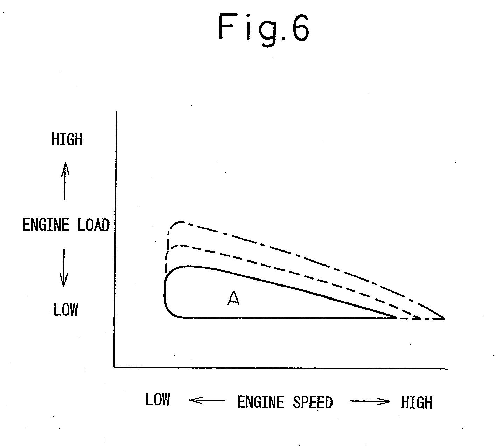

The area A in which an engine operation is prohibited is shown in Fig. 6, and is an operation area in which the combustion temperature T (maximum combustion temperature) becomes higher than the first combustion temperature T1 and lower than the second combustion temperature T2. The more the combustion level deteriorates, the higher the engine load in which the combustion temperature is low becomes. Therefore, the area A in which an engine operation is prohibited expands to the high engine load side. Namely, the solid line is the area in which an engine operation is prohibited when the combustion deterioration level is low. The dotted line is the area in which an engine operation is prohibited when the combustion deterioration level is middle. The chain line is the area in which an engine operation is prohibited when the combustion deterioration level is high.

Next, at step 205, it is determined if the current demanded operation is in the area A in which an engine operation is prohibited determined at step 204. When the result at step 205 is negative, at step 206, the demanded operation out of the area A in which an engine operation is prohibited is carried out as it is.

On the other hand, when the result at step 205 is positive, at step 207, an engine load control is carried out so that the operation out of the area A in which an engine operation is prohibited can be carried out at step 206. For example, the engine load control makes an alternator load increase to increase a demanded load of the engine. Therefore, the demanded engine operation can be made out of the area A in which an engine operation is prohibited.

Further, for example, when the engine is used in a hybrid vehicle, the engine load control can make a motor-generator operates as a generator, can make an amount of power generated by the motor-generator operating as a generator increase, or can make a torque generated by the motor-generator operating as a motor decrease, in order to increase a demanded load of the engine. Therefore, the demanded engine operation can be made out of the area A in which an engine operation is prohibited.

Further, the engine load control can make an amount of power generated by the motor-generator operating as the generator decrease, can make the motor-generator operate as the motor, or can make a torque generated by the motor-generator operating as the motor increase, in order to decrease a demanded load of the engine. Therefore, the demanded engine operation can be made out of the area A in which an engine operation is prohibited.

Thus, when the warming-up of the catalyst device 2 has not been finished, an operation exhausting a large amount of lower olefin is prohibited so that an amount of exhausted lower olefin which makes the oxidation rate of CO in the oxidation catalyst extremely decrease can be reduced. Therefore, the oxidation rate of CO in the oxidation catalyst can be increased to realize the quick warming-up of the catalyst device 2 by using of the oxidation reaction heat of CO.

In the present embodiment, HC adsorption device 3 is arranged immediately upstream the catalyst device 2 having the oxidation ability. However, this does not limit the present invention. Even if the HC adsorption device 3 is omitted, it is advantageous for the quick warming-up of the catalyst device 2 to reduce an amount of exhausted lower olefin before finishing the warming-up of the catalyst device 2.

### LIST OF REFERENCE NUMERALS

- 1:: exhaust passage
- 2:: catalyst device
- 3:: HC adsorption device

## Claims

1. A control system of an internal combustion engine in which a catalyst device having the oxidation ability is arranged in the exhaust system, **characterized in that** when a temperature of said catalyst device is lower than a set temperature, the combustion temperature is made a first combustion temperature or under or is made a second combustion temperature or over, to make an amount of lower olefin in the exhaust gas smaller than that when the combustion temperature is higher than said first combustion temperature and is lower than said second combustion temperature.

2. A control system of an internal combustion engine according to claim 1, **characterized in that** an engine operating area in which the combustion temperature becomes higher than said first combustion temperature and lower than said second combustion temperature is set, and when the temperature of said catalyst device is lower than the set temperature, it is prohibited that the engine operates in said engine operating area.

3. A control system of an internal combustion engine according to claim 2, **characterized in that** the worse the combustion becomes, the more said engine operating area is expanded to the high engine load side.
